# EUROPÄISCHE PATENTANMELDUNG

(11) **EP 1 189 171 A2**
(43) Veröffentlichungstag der Anmeldung: **20.03.2002**
(21) Anmeldenummer: 01121131.5
(22) Anmeldetag: 04.09.2001
(51) Int. Cl.: G06T 15/00

(54) **Verfahren zum Erzeugen eines Bildes in einem virtuellen Studio**

(30) Priorität: 08.09.2000 DE 10044499; 04.11.2000 DE 10054835
(71) Anmelder: Fraunhofer-Gesellschaft zur Förderung der angewandten Forschung e.V., 80636 München (DE)
(72) Erfinder: Griesert, Arnfried, 42799 Leichlingen (DE)
(74) Vertreter: Hilleringmann, Jochen, Dipl.-Ing.

(57) **Zusammenfassung**

Das Verfahren zum Erzeugen eines Bildes in einem virtuellen Studio mit einer Projektion eines realen Objekts, insbesondere eines Moderators, auf ein virtuelles Objekt, bei dem es sich beispielsweise um den virtuellen Boden handelt, auf dem im erzeugten Bild das reale Objekt stehend erscheint, weist folgende Verfahrensschritte auf:
- Bereitstellen eines Speichers für die dem virtuellen Objekt im erzeugten Bild entsprechenden Pixel,
- Markieren von ersten Stellen in dem Speicher, die ersten Bereichen des virtuellen Objekts entsprechen, in denen auf Grund der Kontur bzw. Beschaffenheit des virtuellen Objekts eine Projektion des realen Objekts erfolgen soll,
- Einschreiben von Bilddaten der Projektion des realen Objekts in den Speicher, und zwar innerhalb der ersten Stellen, und
- Anzeigen des sich aus einer Überlagerung des virtuellen Objekts, des realen Objekts und des dem Inhalt des Speichers entsprechenden virtuellen Objekts ergebenden zu erzeugenden Bildes.

## Beschreibung

Die Erfindung betrifft ein Verfahren zum Erzeugen eines Bildes in einem virtuellen Studio, wobei ein reales Objekt, bei dem es sich beispielsweise um einen Moderator handelt, auf ein virtuelles Objekt projiziert wird, bei dem es sich insbesondere um den virtuellen Boden handelt, auf dem im erzeugten Bild das reale Objekt stehend erscheint. Insbesondere handelt es sich bei der Erfindung um ein Verfahren zur Integration (Erzeugung) realistisch wirkender Reflektionen realer Objekte in virtuellen Sets.

Virtuelle Studios werden für eine Vielzahl von Fernseh- und Kinoproduktionen eingesetzt. Sie ermöglichen die Erzeugung von Bildern, in denen ein reales Objekt, beispielsweise ein Moderator oder die Schauspieler, sich in einer virtuellen Umgebung bewegt bzw. bewegen. Mitunter ist es erforderlich, das reale Objekt auf ein virtuelles Objekt zu projizieren. Als Beispiel sei das Spiegelbild genannt, das das reale Objekt (Moderator) auf dem (virtuellen) Boden erzeugt. Bisher oder zu diesem Zweck wurde der (reale) Boden, auf dem das reale Objekt steht, (teil-)reflektierend ausgebildet. Beispielsweise verwendete man bisher in den virtuellen Studios Böden aus transparenten Kunststoffen o.dgl. Materialien, so dass das von dem realen Objekt aufgenommene Bild zusammen mit dessen Spiegelbild aufgenommen wurde. Diese Technik birgt jedoch die Gefahr von Fehlern mit sich, wenn es um die Überlagerung des realen und des virtuellen Bildes geht. Darüber hinaus ist diese Technik relativ aufwendig.

Es ist bereits eine andere Studiotechnik vorgeschlagen worden, bei der das reale Objekt um eine Achse gespiegelt in das zu erzeugende Bild eingeblendet worden ist. Hierbei stellen sich insbesondere dann Unzulänglichkeiten ein, wenn sich in dem zu erzeugenden Bild vor dem realen Objekt virtuelle Elemente befinden. Bei einem solchen virtuellen Element handelt es sich beispielsweise um einen Tisch, hinter dem sich ein Moderator (virtuelles Bild) befindet. Ebenso gibt es Probleme an den Konturen des virtuellen Bodens.

Der Erfindung liegt die Aufgabe zugrunde, ein Verfahren zum Erzeugen eines Bildes in einem virtuellen Studio zu schaffen, das sich durch eine naturgetreuere Wiedergabe von Projektionen realer Objekte auf virtuelle Objekte auszeichnet.

Zur Lösung dieser Aufgabe wird mit der Erfindung ein Verfahren zum Erzeugen eines Bildes in einem virtuellen Studio mit einer Projektion eines realen Objekts, insbesondere eines Moderators, auf ein virtuelles Objekt, bei dem es sich beispielsweise um den virtuellen Boden handelt, auf dem im erzeugten Bild das reale Objekt stehend erscheint, mit den folgenden Verfahrensschritten vorgeschlagen:
- Bereitstellen eines Speichers für die dem virtuellen Objekt im erzeugten Bild entsprechenden Pixel,
- Markieren von ersten Stellen in dem Speicher, die ersten Bereichen des virtuellen Objekts entsprechen, in denen auf Grund der Kontur bzw. Beschaffenheit des virtuellen Objekts eine Projektion des realen Objekts erfolgen soll,
- Einschreiben von Bilddaten der Projektion des realen Objekts in den Speicher, und zwar innerhalb der ersten Stellen, und
- Anzeigen des sich aus einer Überlagerung des virtuellen Objekts, des realen Objekts und des dem Inhalt des Speichers entsprechenden virtuellen Objekts ergebenden zu erzeugenden Bildes.

Bei dem erfindungsgemäßen Verfahren ist die Position des realen Objekts relativ zum virtuellen Objekt, auf das das reale Objekt projiziert wird, bekannt. Genau so ist selbstverständlich die Position des realen Objekts in der übrigen virtuellen Umgebung bekannt. Es wird definiert, welcher Teil des zu erzeugenden Bildes dasjenige virtuelle Objekt ist, auf das das reale Objekt projiziert wird. Die Daten für die Pixel dieses virtuellen Objekts im zu erzeugenden Bild werden in einem Speicher gespeichert. Je nach der Beschaffenheit und dem Aussehen des virtuellen Objekts ist es möglich, dass in dem zu erzeugenden Bild eine Projektion des realen Objekts auf dem virtuellen Objekt nicht erscheinen darf. So kann es beispielsweise sein, dass der virtuelle Boden, auf dem sich ein Moderator als reales Objekt befindet, reflektierende und nicht reflektierende Bereiche aufweist. Die Projektion des Moderators ist dann im zu erzeugenden Bild selbstverständlich lediglich in den reflektierenden Bereichen des Bodens zu sehen. Erfindungsgemäß wird daher der Speicher für die Bilddaten (Pixel) des virtuellen Objekts im zu erzeugenden Bild an all denjenigen Stellen markiert, die Bereiche des virtuellen Objekts im zu erzeugenden Bild repräsentieren, an denen eine Projektion des realen Objekts erfolgen soll. Wenn nun der Speicher mit den Projektionsdaten überschrieben wird, so werden diese Projektionsdaten in die zuvor markierten Stellen des Speichers eingeschrieben. Damit ergibt sich dann bei der anschließenden Erzeugung des Bildes durch Überlagerung des virtuellen Objekts, des realen Objekts und des dem Inhalt des Speichers entsprechenden virtuellen Objekts eine naturgetreue Wiedergabe der Projektion des realen Objekts auf dem virtuellen Objekt in der virtuellen Umgebung.

Sofern sich nun zwischen dem realen Objekt und dessen Projektion auf dem virtuellen Objekt virtuelle Elemente (Tisch o.dgl.) befinden, so sieht das erfindungsgemäße Verfahren gemäß einer vorteilhaften Variante vor, in dem Speicher zusätzlich auch all diejenigen Stellen zu markieren, die mit den zuvor markierten Stellen zusammenfallen und denjenigen Bereichen des virtuellen Objekts entsprechen, in denen auf Grund einer Projektion des virtuellen Elements auf das virtuelle Objekt eine Projektion des realen Objekts nicht erlaubt ist. Damit wird sichergestellt, dass die Projektion des realen Objekts nicht in der Projektion des virtuellen Elements auf dem virtuellen Objekt erscheint. Für den Fall, dass sich ein Moderator in einem virtuellen Studio hinter einem virtuellen Tisch, einer virtuellen Theke o.dgl. befindet, bedeutet dies, dass sich überall dort, wo sich der Tisch bzw. die Theke auf dem Boden spiegelt, nicht das Spiegelbild des Moderators erscheint.

Weitere vorteilhafte Ausgestaltungen und Aspekte der Erfindung ergeben sich aus den Unteransprüchen und der nachfolgenden Beschreibung, bei der davon ausgegangen worden ist, dass die Funktionsweise eines virtuellen Studios an sich bekannt ist.

Das Prinzip des erfindungsgemäßen Verfahrens basiert auf der Projektion des Moderators im Blau- oder anders gefärbten Raum auf ein virtuelles Objekt im Set, bei dem es sich insbesondere um den virtuellen Boden handelt. Die Projektion ist dabei an die Position des Moderators gekoppelt (und zwar insbesondere durch optisches Tracking oder andere Methoden der Nachführung der Moderatorposition).

Zunächst wird ein (virtuelles) Objekt als beispielsweise Boden ausgezeichnet. Dies kann entweder ein Rechteck, eine Scheibe oder ein beliebig modelliertes Objekt sein. In einem ersten Renderschritt wird dieses Objekt in einen separaten Buffer gerendert (in OpenGL ist dies ein sogenannter "Stencil Buffer"). Dieser Buffer wird benötigt, um die Reflektionen zum Rand des Bodens hin korrekt abschneiden zu können.

In den zuvor genannten Buffer werden nun an denjenigen Stellen, an denen die reflektierten Objekte erscheinen sollen, ein erster Wert (beispielsweise 1) eingeschrieben, während an allen anderen Stellen, an denen die reflektierten Objekte nicht erscheinen sollen, ein zweiter Wert (beispielsweise 0) geschrieben wird. Jetzt wird die gesamte Szene um die y-Achse (d.h. horizontal) gespiegelt gerendert, und zwar nur dort, wo die Speicherstellen des Buffers den ersten Wert aufweisen. Auch die Lichtquellen werden korrekt in ihrer Position gespiegelt, damit auch die Beleuchtungsberechnung noch stimmt.

Da man Objekte separat in den Vordergrund schalten kann, sind für diese Objekte in dem Stencil Buffer an den entsprechenden Stellen ein dritter Wert eingeschrieben. Dadurch kann verhindert werden, dass die Projektion des Moderators an diejenigen Stellen des Stencil Buffers eingeschrieben wird, die mit dem dritten Wert belegt sind.

Die Reflektion des Moderators ergibt sich nun direkt aus dem realen Kamerabild, das durch einen Chromakeyer geleitet wird, der das Bild mit einer Maske im Alphakanal versieht. Dadurch wird das Bild des Moderators vom blauen oder anders gefärbten Hintergrund getrennt. Dieses wird gespiegelt und in den Framebuffer gerendert.

Das Rendern erfolgt allerdings nur da, wo der Buffer den ersten Wert aufweist. Dadurch erscheinen virtuelle Objekte, die im Vordergrund geschaltet sind, auch wirklich vor dem Moderator. Durch den Test auf den ersten Wert wird auch der Rand des Bodens korrekt beachtet.

Der Boden selbst wird nachträglich durch einfaches Blending über die bis jetzt gerenderte Szene berechnet. Vorher werden die virtuellen Lichtquellen wieder an ihren originalen Positionen platziert.

In einem letzten Schritt wird die gesamte Szene, die oberhalb des Bodens liegt, noch gerendert. Ein entsprechend eingestelltes Clipping verhindert, dass es zu Fehlern bei Objekten kommt, die in den Boden eindringen und somit beim Spiegeln ungewollte Effekte darstellen. Dies ist jedoch für die eigentliche Moderatorenreflektion von untergeordneter Bedeutung.

Was bei dem hier beschriebenen Verfahren ferner noch festgelegt werden sollte, ist die Position (Horizontale), an der das Kamerabild gespiegelt wird. Diese Horizontale lässt sich als Zeile von Pixeln ausdrücken. Hierfür gibt es mehrere Möglichkeiten. Wenn man davon ausgeht, dass die Kamera nicht bewegt wird, kann man eine manuelle Anpassung der horizontalen Spiegelachse benutzen. Alternativ kann man eine automatische Berechnung dieser Spiegelachse aus der Moderatorenposition im Koordinatensystem des Sets berechnen. Auch diese kann man entweder manuell eingeben oder man verwendet ein insbesondere optisches Moderatoren-Tracking-System, bei dem die Position des Moderators unter Verwendung von Bilderkennungssystemen aus den Bildern mehrerer Kameras ermittelt wird. Damit erhält man die Moderatorenposition automatisch, so dass das System die Zeile berechnet, um die das Kamerabild gespiegelt werden muss.

Die Vorteile des hier beschriebenen Verfahrens gegenüber den konventionellen Methoden sind wie folgt zusammengefasst:
- Konturen des Bodens werden erkannt; es wird unterschieden zwischen spiegelnden und nicht spiegelnden Bereichen des Bodens.
- Virtuelle Objekte lassen sich in den Vordergrund schalten.
- Keine Transparenz der Moderatorenreflektion vor virtuellen Objekten, was bedeutet, dass die Sets einen hellen Hintergrund bzw. einen hellen virtuellen Boden aufweisen können, ohne dass dies die Moderatorenreflektion oder, allgemeiner ausgedrückt, die Projektion realer Objekte nachteilig beeinflusst.

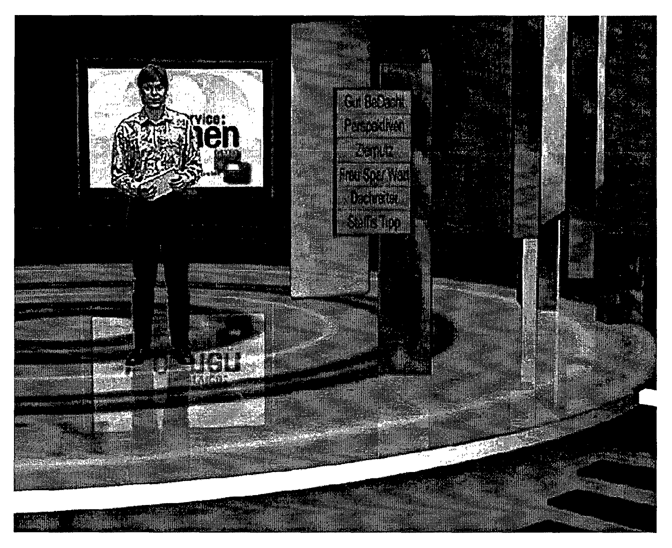

Anhand der Abbildung wird erkennbar, wie "naturgetreu" die virtuell erzeugte Projektion ist. Die Abbildung zeigt ein Set mit einer reflektierenden Scheibe als Boden, an dessen Kanten die Reflektion der virtuellen Objekte und des realen Objekts (Moderator) korrekt abgeschnitten ist. Dies gelingt, indem die Silhouette des Bodens in den Buffer abgelegt ist, d.h. in dem Buffer diejenigen Bereiche definiert sind, in denen Projektionsdaten des realen und des virtuellen Objekts eingeschrieben werden dürfen.

Bei genauer Betrachtung der Abbildung kann man erkennen, dass die Reflektion des Moderators keinen transparenten Anteil des reflektierenden Hintergrunds aufweist. Dies wäre beispielsweise problematisch bei der Verwendung von transparentem Kunststoff als Studioboden. Auch ist das Set sehr hell gehalten. Spätestens da bekommt man bei der herkömmlichen Technologie der Erzeugung von Projektionen realer und virtueller Objekte in einer virtuellen Umgebung Probleme des Durchscheinens.

## Patentansprüche

1. Verfahren zum Erzeugen eines Bildes in einem virtuellen Studio mit einer Projektion eines realen Objekts, insbesondere eines Moderators, auf ein virtuelles Objekt, bei dem es sich beispielsweise um den virtuellen Boden handelt, auf dem im erzeugten Bild das reale Objekt stehend erscheint, mit den folgenden Verfahrensschritten:
- Bereitstellen eines Speichers für die dem virtuellen Objekt im erzeugten Bild entsprechenden Pixel,
- Markieren von ersten Stellen in dem Speicher, die ersten Bereichen des virtuellen Objekts entsprechen, in denen auf Grund der Kontur bzw. Beschaffenheit des virtuellen Objekts eine Projektion des realen Objekts erfolgen soll,
- Einschreiben von Bilddaten der Projektion des realen Objekts in den Speicher, und zwar innerhalb der ersten Stellen, und
- Anzeigen des sich aus einer Überlagerung des virtuellen Objekts, des realen Objekts und des dem Inhalt des Speichers entsprechenden virtuellen Objekts ergebenden zu erzeugenden Bildes.

2. Verfahren nach Anspruch 1 mit den zusätzlichen Verfahrensschritten:
- Markieren von zweiten Stellen in dem Speicher, die innerhalb der ersten Bereiche liegenden Bereichen des virtuellen Objekts entsprechen, in denen auf Grund einer Projektion eines vor dem realen Objekt angeordneten virtuellen Elements, wie z.B. einem Tisch o.dgl., auf das virtuelle Objekt eine Projektion des realen Objekts nicht erfolgen soll,
- Einschreiben von Bilddaten der Projektion des realen Objekts in den Speicher lediglich an solchen Speicherstellen, die nur mit den ersten Stellen zusammenfallen, und
- Anzeigen es sich aus einer Überlagerung des virtuellen Objekts, des realen Objekts, des virtuellen Elements und des dem Inhalt des Speichers entsprechenden virtuellen Objekts ergebenden zu erzeugenden Bildes.

3. Verfahren nach Anspruch 1 oder 2 mit dem weiteren Verfahrensschritt des Einschreibens von Bilddaten der Projektion eines hinter dem realen Objekt angeordneten virtuellen Hintergrundes in den Speicher, und zwar in die Stellen des Speichers, die gleich der ersten oder der zweiten Stellen sind.

4. Verfahren nach einem der Ansprüche 1 bis 3, **dadurch gekennzeichnet, dass** die Position des realen Objekts fest oder manuell eingegeben ist oder automatisch, insbesondere optisch, nachgeführt wird.

5. Verfahren nach einem der Ansprüche 1 bis 4, **dadurch gekennzeichnet, dass** der Reflektionsgrad, mit dem das virtuelle Objekt in dem zu erzeugenden Bild erscheint, einstellbar ist, und zwar insbesondere durch Veränderung der Transparenz.
